# EUROPEAN PATENT APPLICATION

(11) **EP 4 600 052 A2**
(43) Date of publication of application: **13.08.2025**
(21) Application number: 25184731.5
(22) Date of filing: 21.10.2022
(51) Int. Cl.: B60C 11/16

(54) **TYRE FOR A VEHICLE**

(30) Priority: 18.11.2021 FI 20216181
(62) Divisional of application: 22202881.3
(71) Applicant: Nokian Renkaat Oyj, 37101 Nokia (FI)
(72) Inventor: LIUKKULA, Mikko, 37101 Nokia (FI); HEIKKINEN, Lauri, 37101 Nokia (FI); MARKKULA, Katriina, 37101 Nokia (FI); KEMPPAINEN, Noora, 37101 Nokia (FI)
(74) Representative: Berggren Oy

(57) **Abstract**

The invention relates to a studded tyre for a vehicle, comprising a tread (18) provided with a number of anti-skid studs (10). The studded tyre comprises an underlayer (20) arranged below the tread and comprising an adaptive material layer (21). The anti-skid stud (10) is arranged at least partly on said underlayer (20), and the shape of the stud, in combination with the underlayer, is arranged to provide the anti-skid stud with a stud piercing force, wherein at an ambient temperature of 0°C, the stud piercing force of the anti-skid stud is at least 6% greater than the stud piercing force of the anti-skid stud at an ambient temperature of 20°C, and at an ambient temperature of -30°C, the stud piercing force of the anti-skid stud is at least 20% greater than the stud piercing force of the anti-skid stud at an ambient temperature of 20°C. The invention also relates to the use of an elastomer material.

## Description

### Field of the invention

The present invention relates to a studded pneumatic tyre for a vehicle. Furthermore, the invention relates to the use of an elastomer material in a tyre.

### Technical background

In the field of tyres for vehicles, it is known to install anti-skid studs particularly in winter tyres developed for snowy and icy roads, for improving traction.

The function of the studs is to bite into ice and thereby to form a mechanical bond between the ground surface and the tyre, particularly for situations in which a sufficient result is not provided merely by the rubber of the tyre and the pattern formed in it. An anti-skid stud typically comprises a body of the anti-skid stud and a tip of the anti-skid stud. The tip of the anti-skid stud, or a part of it, is intended to be in contact with the surface.

### Summary of the invention

It is an aim of the invention to provide a studded pneumatic tyre for a vehicle.

The solution according to the invention is characterized in what is defined in the independent claims. Advantageous embodiments are presented in the dependent claims.

With the winter tyre presented herein, it is possible to obtain a studded tyre which wears the driving surface to a lesser extent but which can have traction properties appropriate for a winter tyre in spite of its reduced wearing effect on the driving surface.

The winter tyre comprises a tyre body (carcass) and a tread. The tread is provided with anti-skid studs. Each anti-skid stud can be arranged in an anti-skid stud hole provided in the tread.

A single winter tyre can comprise, for example, 45 to 150 anti-skid studs per one meter of rolling circumference, preferably 48 to 120 anti-skid studs per one meter of rolling circumference, and most preferably 50 to 100 anti-skid studs per one meter of rolling circumference. Thus the winter tyre can have traction properties optimized for winter conditions. A person skilled in the art knows the term meter of rolling circumference. The rolling circumference of a tyre can be calculated by multiplying the total diameter of the tyre by 3.05.

An anti-skid stud comprises a body of the anti-skid stud which can comprise a stem and a bottom flange of the anti-skid stud. Thus, the anti-skid stud for a studded tyre for a vehicle can comprise a bottom flange at the bottom end of the stud body, and a stem extending from the bottom flange. The diameter of the bottom flange is suitably larger than the diameter of the stem of the anti-skid stud. Said body of the anti-skid stud is preferably made of metal, but other suitable materials may be used as well. Typically, the anti-skid stud also comprises a tip of the anti-skid stud, which may consist of, for example, hard metal or ceramic, but other suitable materials may be used as well.

The studded tyre comprises an underlayer arranged under the tread and having a hardness which may vary substantially with the ambient temperature. Thanks to this, the wear of the road surface can be substantially reduced. Said underlayer is preferably arranged at least partly below the anti-skid stud. Thus, the bottom of the anti-skid stud can be in contact with said underlayer, and the anti-skid stud can be pressed against and/or retract into the underlayer.

The anti-skid stud, preferably the bottom flange of the anti-skid stud, can be in direct contact with the underlayer. Thus, in this embodiment, there is no other material layer between the anti-skid stud and the underlayer. Alternatively, for example, a separate stud pad may be arranged between the anti-skid stud and the underlayer.

Further, the studded tyre may comprise a separate bottom rubber ply arranged below the underlayer. Thus, the properties of the studded tyre can be improved. Moreover, the process of manufacture of the tyre can be easier to control. In an example, the studded tyre is not provided with a bottom rubber ply below the underlayer. Thus, the manufacturing costs of the tyre can be reduced.

The underlayer can comprise one or more polymer materials having a hardness depending on the temperature of the respective polymer material. The underlayer can comprise elastomer material.

The underlayer comprises an adaptive material layer. Thus, the underlayer according to this specification can also be called as an adaptive underlayer. The underlayer may consist primarily or entirely of said adaptive material layer. The adaptive material layer comprises a material having a hardness substantially depending on ambient temperature.

The adaptive material layer can be made of a material compound having a hardness substantially depending on ambient temperature. Preferably, the underlayer is made of an elastomer material having a hardness depending on the temperature of said elastomer material.

The tyre may also comprise a separate intermediate layer in addition to the adaptive material layer. In this embodiment, the intermediate layer is preferably arranged between the adaptive material layer and the surface layer (tread). The intermediate layer may be arranged to surround the stud body at least partly. The intermediate layer may be made of, for example, a rubber compound.

In an embodiment, a stud pad is provided in connection with the anti-skid stud. In this embodiment, the solution comprises both the underlayer and the stud pad. By the combined effect of the underlayer and the stud pad, the stud piercing force can be particularly well controlled at different ambient temperatures.

In one preferred embodiment, the underlayer comprises an adaptive material layer, and the stud pad is arranged at least partly between the anti-skid stud and the adaptive material layer. By the combined effect of the stud pad and the adaptive material layer, wear of the road surface under non-frozen conditions can be reduced while the adaptive material layer together with the stud pad may substantially improve traction of the tyre on an icy road.

By the combined effect of the adaptive material layer and the stud pad, the stud piercing force can be particularly well controlled at different ambient temperatures. Furthermore, the manufacture of the necessary components can be facilitated. The stud pad can comprise or consist of a material which is soft at room temperature and thereby reduces wear of the road surface caused by the tyre under non-frozen conditions.

The studded tyre according to the specification comprises a tread provided with a number of anti-skid studs, as well as an underlayer arranged below the tread. Anti-skid studs can be arranged in connection with said underlayer, preferably at least partly on said underlayer. An intermediate layer may be provided between the tread and the underlayer. The underlayer may consist of an adaptive material layer.

The shape of the anti-skid stud together with the underlayer can be configured to provide the anti-skid stud with a stud piercing force wherein
A) at the ambient temperature of 0°C, the stud piercing force of the anti-skid stud is at least 6% greater, preferably at least 8% greater and most preferably at least 10% greater than the stud piercing force of the anti-skid stud at the ambient temperature of 20°C, and
B) at the ambient temperature of -30°C, the stud piercing force of the anti-skid stud is at least 20% greater, preferably at least 25% greater and most preferably at least 35% greater than the stud piercing force of the anti-skid stud at the ambient temperature of 20°C.

Furthermore, the stud piercing force of the anti-skid stud is preferably lower than 120 N at the ambient temperature of 20°C.

In a preferred embodiment, at the ambient temperature of -10°C, the stud piercing force of the anti-skid stud is at least 8% greater, preferably at least 10% greater and most preferably at least 15% greater than the stud piercing force of the anti-skid stud at the ambient temperature of 20°C.

The underlayer preferably consists of an adaptive material layer. Hardening of the adaptive material layer can increase the stud piercing force of the anti-skid stud, because the anti-skid stud thus cannot substantially retract into the tyre, whereby the penetration of the stud into the ice is greater and the traction of the tyre can be significantly better. Under warm conditions, the underlayer can substantially soften, whereby the softening underlayer can allow the retraction of the stud body into the tyre, whereby it can reduce the stud piercing force and the dynamic stud impact and thereby reduce the wear of the road.

Further, the above mentioned advantages can be pronounced if the shape of the stud and the underlayer are configured to provide the anti-skid stud with a stud piercing force such that the stud piercing force of the anti-skid stud at the ambient temperature of -10°C is configured to be at least 10% greater than the stud piercing force of the anti-skid stud at the ambient temperature of 20°C; and furthermore, the stud piercing force of the anti-skid stud at the ambient temperature of -30°C is configured to be at least 30% greater than the stud piercing force of the anti-skid stud at the ambient temperature of 20°C.

The thickness of the underlayer can be at least 0.5 mm and not greater than 8 mm, preferably at least 1 mm and not greater than 7 mm, and more preferably at least 2 mm and not greater than 5 mm. Thus, the properties of the underlayer can be easier to control so that the underlayer can yield to a particularly suitable extent when the ambient temperature rises, which can further reduce wear of the road surface. In this application, the thickness of the underlayer refers to the thickness of the underlayer when the anti-skid stud is in rest position, that is, when the anti-skid stud is not subjected to external forces, such as pressure caused by the driving surface.

The adaptive material layer can be made of a material whose glass transition temperature (Tg) is arranged in the range from -15°C to +15°C, preferably from -12°C to +12°C, more preferably from -8°C to +8°C, and most preferably from -5°C to +5°C. In an example, the adaptive material layer can be made of a material whose glass transition temperature (Tg) is arranged in the range from -20°C to +12°C. The closer to the temperature of 0°C the glass transition temperature Tg of the adaptive material layer is arranged, the easier the stud piercing force of the tyre can be to control at different temperatures.

Control of the dynamic stiffness of the adaptive material layer can significantly improve the predictability of the properties of the tyre. If the dynamic stiffness of the adaptive material layer increases significantly when the temperature falls below the freezing point, the adaptive material layer supports the stud better and thereby improves the traction properties of the tyre in winter. The dynamic stiffness (E*) of the adaptive material layer can be arranged to change in a controlled manner in a temperature range, for example, from -30°C to +30°C.

In a preferred embodiment, the adaptive material layer is made of a polymer material having a dynamic stiffness (E*, MPa)
- lower than 20 MPa at an ambient temperature of 20°C,
- in the range from 40 to 400 MPa, preferably from 50 to 300 MPa, at an ambient temperature of 0°C, and
- of at least 500 MPa at an ambient temperature of -30°C.

Using such a material in the underlayer of a tyre can reduce road wear caused by the studded tyre as well as improve the traction of the studded tyre on an icy driving surface.

Thus, also, the dynamic stiffness (E*, MPa) of the adaptive material layer may be
- lower than 20 MPa at an ambient temperature of 20°C,
- in the range from 40 to 400 MPa, preferably from 50 to 300 MPa, at an ambient temperature of 0°C, and
- at least 500 MPa at an ambient temperature of -30°C.

The change in the dynamic stiffness of the adaptive material layer upon a decrease in the temperature can have a greater impact on the traction of the tyre in winter than the change in the hardness of the material upon a decrease in the temperature. For the above-mentioned dynamic stiffness values, the adjustment of the stud piercing force of the tyre at different temperatures can be more controllable, and the traction properties of the winter tyre can be better optimized for different temperatures. Thanks to the above-mentioned dynamic stiffness, for example the stopping distance on an icy driving surface can be substantially reduced.

In a preferred example, for optimizing the traction properties of the tyre in winter,
(A) the hardness (ShA) of the adaptive material layer can be
   - lower than 60 ShA and preferably lower than 55 ShA at 20°C, and
   - preferably at least 60 ShA, more preferably at least 65 ShA, at 0°C, and
   - higher than 75 ShA at -30°C;
   and furthermore,
(B) the dynamic stiffness of the adaptive material layer can be
   - lower than 20 MPa at an ambient temperature of 20°C,
   - between 40 and 400 MPa at an ambient temperature of 0°C, and
   - at least 500 MPa at an ambient temperature of -30°C.

In an embodiment, the material of the adaptive material layer is configured to soften at warm ambient temperatures so that the ShA hardness of the adaptive material layer is 65 at the most, for example between 40 and 65, preferably not greater than 60, for example between 40 and 60, and most preferably not greater than 55, for example between 40 to 55, at an ambient temperature of +20°C. Thus, the elasticity of the underlayer may be at a particularly appropriate level so that the wear of the road surface can be reduced. Further, the material of the adaptive material layer can be configured to harden at cold temperatures so that the ShA hardness of the adaptive material layer can be at least 70, preferably between 70 and 90, and most preferably at least 75, at an ambient temperature of -30°C. Thus, the hardness of the underlayer can be at a particularly appropriate level whereby the traction properties of the winter tyre can be improved. Hardening of the underlayer under cold conditions can provide the anti-skid stud with a better support and thereby provide the studded tyre with better traction properties.

The adaptive material layer may comprise at least 20 phr, preferably at least 30 phr, and most preferably at least 50 phr of styrene butadiene rubber. By using styrene butadiene rubber, the glass transition temperature can be more easily determined as desired.

Alternatively or in addition, the adaptive material layer can contain
- at least 10 phr of natural rubber (caoutchouc), and/or
- at least 10 phr of polybutadiene rubber.

These materials may improve the controllability of the elasticity of the underlayer even at cold temperatures.

The adaptive material layer may comprise at least 5 phr of resin, preferably aromatic resin. By means of the resin, the glass transition temperature of the underlayer can be adjusted in a cost-efficient and controlled manner to a predetermined temperature range.

The adaptive material layer may comprise at least 20 phr of reinforcement; preferably, the total content of reinforcement is between 20 and 60 phr, and most preferably between 25 and 50 phr. Thus, the hardness of the underlayer is easier to optimize to a desired level. The reinforcing material may be selected from silica reinforcement and black carbon reinforcement. The reinforcement may comprise both silica reinforcement and black carbon reinforcement.

In a preferred example, for adjusting the glass transition temperature of the underlayer to a predetermined temperature range in a controlled and precise manner, the adaptive material layer comprises both styrene butadiene rubber and resin, preferably aromatic resin. In this embodiment, the contents of styrene butadiene rubber and resin are preferably in the range defined in this application.

Stiffening and hardening of the underlayer can increase the stud piercing force of the anti-skid stud, because the anti-skid stud thus cannot substantially retract into the tread of the tyre, whereby the penetration of the stud into the ice is greater and the traction of the tyre can be significantly better. A stiffer underlayer provides the stud with more support, whereby traction in icy conditions can be substantially improved as the temperature drops. In warm conditions, the underlayer can substantially soften, whereby the underlayer can allow the stud body to retract into the tread of the tyre, whereby it can reduce the stud piercing force and the dynamic stud impact and thereby reduce the wear of the road.

In an embodiment, the outer surface of the underlayer is arranged at least partly below the bottom flange of the anti-skid stud so that the bottom of the anti-skid stud retracts partly into the underlayer during the use of the studded tyre. In this embodiment, the properties of the studded tyre can be more predictable. Furthermore, the anti-skid stud can efficiently retract into the underlayer when in contact with the road, so that the damping effect of the underlayer can be more pronounced.

The underlayer can be provided with a notch or another form for the anti-skid stud, whereby the bottom flange of the anti-skid stud may be arranged at least partly within the underlayer. Thus, the retraction of the stud upon contact - the retraction reducing the stud piercing force, the dynamic impact and the road wear - can be more predictable.

A studded tyre comprising an underlayer with an adaptable material layer whose hardness and stiffness are substantially dependent on the ambient temperature, can involve a variety of advantages.

The underlayer can dampen the dynamic impact and the stud piercing force when the anti-skid stud is not necessary for securing traction. Thus, harmful noise caused by the studded tyre, also inside the vehicle, can be substantially reduced. In addition, road wear caused by the studded tyre can be substantially reduced. Furthermore, the studded tyre comprising an underlayer with an adaptable material layer whose hardness and/or stiffness is substantially dependent on the ambient temperature can strengthen the dynamic impact and stud piercing force of the anti-skid stud when the ambient temperature drops below the freezing point, whereby the anti-skid stud generates a sufficient stud piercing force to bring the traction of the studded tyre up to a suitable level. The underlayer can also improve holding of the stud in place.

In an embodiment, the adaptive material layer is made of a material whose hardness and/or stiffness is modified according to forces effective on the underlayer so that the road holding of the anti-skid stud is improved when the forces effective on the underlayer are changed, for example, during braking or acceleration.

At an ambient temperature above 0°C, the adaptive material layer can be an elastic piece which can have the capacity to resume its original stiffness after compression. In a preferred example, the adaptive material layer is made, or at least primarily made, of an elastomer material which has, after compression, the capacity to resume its initial stiffness, at an ambient temperature above 0°C. This can substantially reduce road wear when the ambient temperature is so high that no ice is formed on the road.

The studded tyre presented in this application can have, for example, the advantage that the road holding properties of the anti-skid studs in the tyre can be at their best when the traction properties of the studded tyre are needed, that is, on an icy and snowy road surface. Thus, the efficiency and the road holding properties of the anti-skid studs can be particularly good when the studded tyre is used in icy conditions. In warm conditions, on the other hand, the anti-skid stud can retract at least partly into the tyre, whereby the properties of the surface layer (tread) of the tyre can have a greater impact on the traction properties of the tyre when the driving surface is not frozen. A winter tyre according to the solution can protect driving surfaces and reduce wear of road pavements. Furthermore, when driving in warm conditions, the noise caused by the studded tyre can be at a lower level than normal.

The novel solution can also have the advantage that existing tyre moulds and tyre manufacturing techniques can be used for manufacturing novel tyres. This can improve the cost efficiency of tyre manufacture as well as be a solution of particular environmental friendliness.

The new solution can also improve holding of the stud in place, because the anti-skid stud can more efficiently retract at least partly into the tread of the tyre when the road surface is not frozen.

### Brief description of the drawings

In the following, the invention will be described in more detail with reference to the appended drawings, in which
- Fig. 1a: shows the structure of an underlayer and an anti-skid stud according to an example in a side view;
- Fig. 1b: shows the structure of an underlayer and an anti-skid stud according to an example in a cross-sectional view in the longitudinal direction;
- Fig. 2a: shows the structure of an underlayer and an anti-skid stud according to an example in a cross-sectional view in the longitudinal direction;
- Fig. 2b: shows the structure of an underlayer, a stud pad and an anti-skid stud according to an example in a cross-sectional view in the longitudinal direction;
- Fig. 3: shows locations for an adaptive material layer, an intermediate layer, and a surface layer in relation to an anti-skid stud according to an example;
- Fig. 4a: shows the stud piercing force according to an example as a function of temperature for a tyre having an adaptive material layer;
- Fig. 4b: shows the hardness of an underlayer according to an example as a function of temperature; and
- Fig. 4c: illustrates the dynamic stiffness of an underlayer according to an example, as a function of temperature.

The figures are conceptual figures intended to help to understand the invention. The figures are not necessarily in scale.

### Detailed description of some embodiments

In this application, the following reference numerals will be used:
- 10: anti-skid stud,
- 11: tip of the anti-skid stud,
- 12: blind hole in the anti-skid stud,
- 13: stem of the anti-skid stud,
- 14: bottom flange of the anti-skid stud,
- 18: surface layer, tread,
- 20: underlayer,
- 20t: thickness of the underlayer,
- 21: adaptive material layer,
- 22: intermediate layer,
- 23: stud pad,
- 25: inner surface of the underlayer, and
- 26: outer surface of the underlayer.

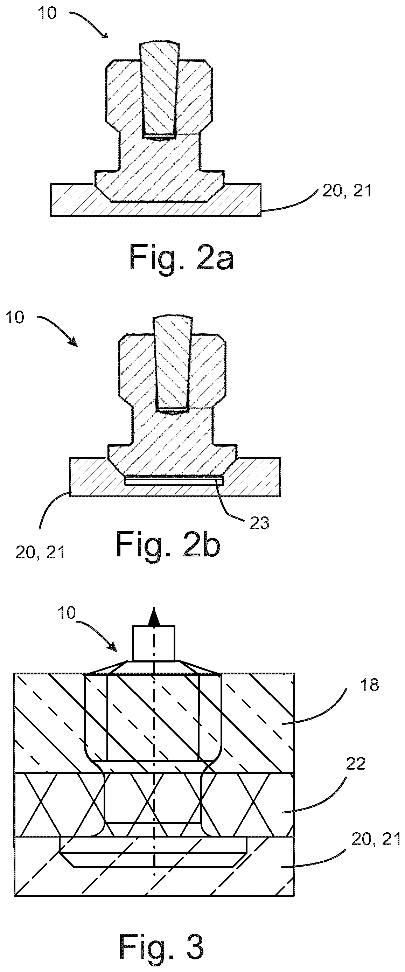

With reference to Fig. 3, a pneumatic tyre may comprise a surface layer (tread) 18 and an underlayer 20, 21 arranged under the outer layer. An anti-skid stud 10 can be placed at least partly on said underlayer 20, 21. The anti-skid stud may be partly embedded in said underlayer. An intermediate layer 22 may be arranged between the surface layer 18 and the underlayer 20, 21.

In this application, the unit phr (parts per hundred rubber) is used, which is known to a person skilled in the art.

In this application, the term hardness (ShA) refers to material hardness which can be determined according to the standard ASTM D2240. An exception to the standard, hardness can be measured at different reference temperatures. The material to be measured is tempered at the reference temperature by keeping the material to be measured at the reference temperature for a time given in Table 1 before the measurements.

**Table 1. Tempering of a sample before hardness measurement.**

| **Sample** | **Temperature °C** | | | | | | | | | | |
|---|---|---|---|---|---|---|---|---|---|---|---|
| **Thickness mm** | **-50** | **-40** | **-25** | **-10** | **-5** | **0** | **5** | **10** | **25** | **40** | **60** |
| | **Time min 1°C to balance** | | | | | | | | | | |
| **10** | **45** | **45** | **40** | **35** | **35** | **30** | **35** | **35** | **35** | **35** | **45** |
| **8** | **35** | **35** | **30** | **30** | **30** | **25** | **30** | **30** | **30** | **30** | **35** |
| **5** | **20** | **20** | **20** | **20** | **20** | **15** | **20** | **20** | **20** | **20** | **20** |
| **3** | **15** | **15** | **15** | **15** | **15** | **10** | **10** | **10** | **10** | **10** | **10** |
| **2** | **10** | **10** | **10** | **10** | **10** | **10** | **10** | **10** | **10** | **10** | **10** |

In this application, the term Dynamic stiffness (E*) refers to the stiffness of the material which can be determined according to the standard ASTM D5992-96 (reapproved 2018).

The measurement of the stud piercing force is taken under the following conditions:
- the air pressure in the tyre shall be 200 kPa ±10 kPa at a temperature of +20°C,
- the tyre shall be kept at the reference temperature for at least one day before the measurements, and
- the stud piercing force is measured either at the reference temperature, or the stud piercing force is measured at room temperature (+20°C), in which case the measurement shall be completed within 10 minutes after the tyre has been removed from the ambient temperature according to the reference temperature.

The measurement is taken as follows:
- the tyre is mounted on a rim,
- the tyre is inflated,
- the wheel is subjected to a load of 70% ±1% of the load capacity of the tyre;
- the direction of the load is parallel to the radius of the wheel passing through the stud and perpendicular to the plane representing a road surface;
- the measurement is taken statically with the stud retracted to be flush with the tyre tread, the measuring direction being the direction of the load.

In this application, the term "tyre" refers to a tyre for a vehicle. The tyre for a vehicle may be a pneumatic tyre for a vehicle, that is, an air-filled tyre for a vehicle. A studded air-filled tyre for a vehicle may be, for example, a tyre for a car or a van.

The tyre for a vehicle comprises a tread intended to be in rolling contact with a surface and provided with anti-skid studs. The term "tread" refers to the surface layer 18 of the tyre.

Anti-skid studs according to the invention can be fastened to the tyre for a vehicle by embedding the bottom flange and the stem of an anti-skid stud into a hole formed in the tyre, which hole may be called a hole for an anti-skid stud. Thus, the bottom flange of the anti-skid stud is preferably placed in the bottom area of the hole for the anti-skid stud, and the stem extends from it outwards, towards the surface of the tyre.

### Anti-skid stud

In this application, the term "stud" refers to an anti-skid stud 10.

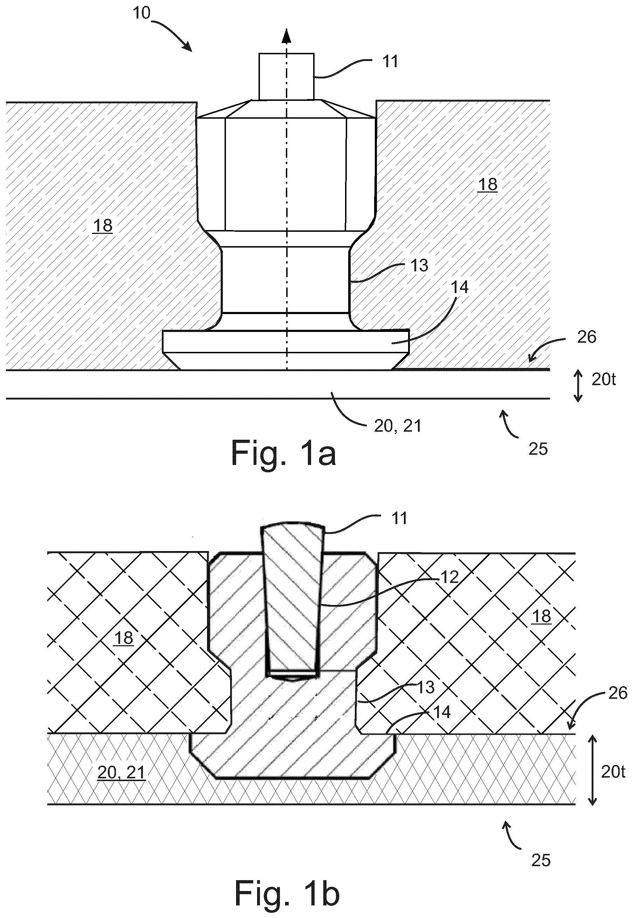

With reference to Figs. 1a-b, the anti-skid stud 10 can comprise a bottom flange 14 of the anti-skid stud 10 arranged to be placed in the bottom section of a hole for an anti-skid stud in a tyre 1 for a vehicle. The body of the anti-skid stud may comprise a bottom flange 14 and a stem 13 extending away from the bottom flange 14. Furthermore, the anti-skid stud typically comprises an anti-skid stud tip 11 fastened to the body.

The tip 11 of the anti-skid stud may be made of a material different from said body of the anti-skid stud. The tip of the anti-skid stud may be made of, for example, hard metal or hard ceramic. The tip of the anti-skid stud may be partly placed within the body of the anti-skid stud and protrude from its outer end.

The body of the anti-skid stud 10 can be made according to a technique of prior art, for example by cold working of the shape from a circular wire preform which can be forced to a desired shape in a number of different steps. A hard metal tip, if used, can be made, for example, by compressing a preform from hard metal powder together with a binder, and by sintering it at a high temperature. The hard metal tip typically has a wedge-like shape, and the body of the anti-skid stud typically comprises a blind hole 12 having a shape matching with the tip 11 of the anti-skid stud. Such an anti-skid stud is assembled, for example, by pressing the hard metal tip into the anti-skid stud body, whereby a strong cotter joint is formed between them.

In this context, hard metal refers to, among other things, hard metal according to prior art. Hard metal is typically a wear resistant metal composite material that may contain tungsten as a carbide compound, and the binding component is usually cobalt. The compounds may also contain titanium carbide, tantalum carbide, molybdenum carbide, or vanadium carbide. Various ceramic based materials with strength and wear properties corresponding to those of hard metal, or particularly wear resistant polymers, can also be classified as materials that can be paralleled with hard metal in this context. The anti-skid stud may be particularly suitable for use with such a tip of an anti-skid stud that is made of a hard metal or ceramic based material.

The total length of the anti-skid stud may be, for example, between 9 mm and 15 mm. For example for cars, the total length of the anti-skid stud may be e.g. between 9 and 12 mm. The length of the anti-skid stud can affect some properties of the anti-skid stud and the tyre.

The anti-skid stud may comprise a bottom flange of the anti-skid stud, whose diameter may be at least 3.5 mm and not greater than 10 mm, preferably between 4 and 9 mm and most preferably between 5 and 8.5 mm. The diameter of the bottom flange is measured at the greatest dimension of the cross-section of the bottom flange. Said diameter of the bottom flange can improve the controllability of the stud piercing force. Furthermore, such an area of the bottom flange of the anti-skid stud can be particularly advantageous for use in combination with an underlayer.

In an example, the tip of an anti-skid stud can be arranged to protrude not more than 1.7 mm, preferably not more than 1.5 mm and most preferably not more than 1.2 mm from the tread of the tyre at an ambient temperature of 20°C.

The surface area of the cross-section of the tip of the anti-skid stud may range from 1.5 mm² to 7.0 mm², more preferably from 2 mm² to 5 mm². Such an area of the tip of the anti-skid stud may be particularly advantageous for use in combination with an underlayer.

The bottom of the anti-skid stud may be provided with an air space which can enable better retraction of the anti-skid stud into the tread when in contact with a driving surface, reducing the stud piercing force, the dynamic impact, and road wear. In an example, the underlayer can, in the rest position of the anti-skid stud, touch e.g. 60 to 100% of the bottom area of the anti-skid stud, or e.g. 70 to 90 % of the bottom area of the anti-skid stud. In such a case, the advantages of the underlayer can be pronounced. For example, the control of the traction properties of the tyre can be improved by using an air space arranged at the bottom of the anti-skid stud, as well as a underlayer which is contact with said section of the bottom area of the anti-skid stud.

Thus, in an example, the lower surface of the bottom flange of the anti-skid stud 10 can be provided with a notch which forms an air space either between the bottom of the anti-skid stud 10 and the underlayer 20, 21, or alternatively between the bottom of the anti-skid stud 10 and a stud pad 23. Said notch may provide the underlayer 20, 21 with space to expand, whereby the properties of the anti-skid stud can be more controllable at various temperatures.

### Surface layer

The term "surface layer" 18 refers to the tread of the tyre. The surface layer 18 is preferably the outermost material layer of the tyre. The surface layer is shown in e.g. Figs. 1a and 1b.

The surface layer 18 of the studded tyre may consist of one or more layers. In an embodiment, the surface layer 18 of the studded tyre consists of a single rubber layer. In another embodiment, the surface layer 18 of the studded tyre consists of two or at least two rubber layers. The hardness of the surface layer of the studded tyre may range, for example, from 48 to 60 ShA, more preferably from 50 to 58 ShA, and most preferably from 52 to 57 ShA, measured at 20°C. Thus, the performance characteristics of the tyre can be particularly good for winter driving conditions. The traction properties of such a tyre can improve when the ambient temperature is above the freezing point.

### Underlayer

The term "underlayer" 20 refers to a material layer in the tyre which is preferably arranged at least partly below the anti-skid stud 10.

The underlayer 20 can comprise or consist of an adaptive material layer 21. The underlayer 20 can comprise one or more material layers, such as 1 to 3 layers, preferably 1 to 2 layers. Preferably, the underlayer 20 consists of an adaptive material layer 21.

The anti-skid stud 10 can be placed at least partly above said underlayer 20. Thus, the shape of the stud together with the underlayer 20 can be configured to provide the anti-skid stud 10 with the stud piercing force. The underlayer 20, 21 may be arranged between the surface layer and the carcass of the tyre. Preferably, the underlayer 20 is arranged, at least partly, between the lower flange of the stud and the reinforcements of the tyre. In this context, the reinforcements of the tyre refer to the belts, such as steel and nylon belts, of the tyre.

The underlayer 20, 21 is preferably arranged so that the anti-skid stud 10 is pressed against the underlayer 20 during use. Thus, it is possible to have an effective impact on certain properties of the anti-skid stud and the tyre, for example to improve the traction properties of the tyre on an icy driving surface.

The underlayer 20 has an inner surface 25 and an outer surface 26. The outer surface 26 of the underlayer suitably faces the anti-skid stud, as shown in Figs. 1a and 1b, for example. The inner surface 25 of the underlayer substantially faces the center of the tyre 1.

The anti-skid stud may be in direct contact with the outer surface 26 of the underlayer 20. Thus, the bottom flange of the stud may be arranged in connection with the outer surface of the underlayer 20 so that the stud is pressed against the underlayer 20 during driving on a surface. If the underlayer is made of a relatively hard material, a relatively great force is needed for pressing the stud at its tip to be substantially flush with the outer surface of the tread during driving on a surface. Such a great stud piercing force can cause substantial wear of the road surface, as well as increased tyre noise. Therefore, when driving on a non-frozen road surface, the underlayer under the stud would preferably be a relatively soft material, whereby a lesser force is needed for pressing the tip of the anti-skid stud to be substantially flush with the outer surface of the tread.

The underlayer has a thickness t20, which refers to the dimension of the underlayer in the depth direction when the underlayer is in the rest position.

The thickness t20 of the underlayer can be at least 0.5 mm, such as between 1.0 mm and 7 mm, more preferably at least 1.5 mm, and most preferably at least 2 mm. Furthermore, the thickness of the underlayer may be not greater than 8 mm, more preferably not greater than 7 mm, and most preferably not greater than 6 mm, for example between 2 mm and 5 mm. Thus, the control of the road holding properties of the anti-skid stud can be substantially improved at cold weather, and moreover, the wear of the driving surface at warm weather can be substantially reduced. Moreover, the underlayer of the presented thickness can be sufficiently compressible to reduce wear of the driving surface, to reduce tyre noise, to improve the driving performance of the tyre as well as to keep the tip of the anti-skid stud sufficiently protruded from the tyre to provide the tyre with good traction on an icy driving surface.

In an embodiment, the tyre comprises a surface layer 18, an intermediate layer 22, as well as an underlayer 20, the underlayer preferably consisting of an adaptable material layer 21. The intermediate layer 22 is thus preferably arranged between the underlayer 20, 21 and the surface layer 18. The intermediate layer 22 can support the anti-skid stud and improve the properties of the tyre. In an example, the thickness of the intermediate layer can thus be at least 1 mm, more preferably at least 1.5 mm, and most preferably between 2 mm and 5 mm. Thus, the thickness of the adaptive material layer may be at least 0.5 mm, preferably at least 1 mm, and even more preferably at least 1.5 mm, such as between 1.5 mm and 4 mm. Using an underlayer 20 arranged under the anti-skid stud, as well as an intermediate layer 22, can provide the anti-skid stud with particularly suitable road holding properties in relation to the wear of the driving surface. Thanks to this embodiment, the control of the traction properties of the tyre can be substantially improved. In addition, the properties of the vehicle tyre can be guided in the desired direction more efficiently than in other solutions. Furthermore, making an underlayer thinner than that presented may be more challenging than making the underlayer in said thickness.

The anti-skid stud 10 may be arranged in the studded tyre to be substantially surrounded by the surface layer 18 and/or the intermediate layer 22. Thus, for example, at least 80% of the body of the anti-skid stud may be surrounded by the surface layer and/or the intermediate layer. The bottom flange of the anti-skid stud may thus substantially lie on the underlayer, and the stem of the anti-skid stud may be substantially surrounded by the surface layer and/or the intermediate layer. Thus, the anti-skid stud can retract when the road surfaces are not frozen, and simultaneously the surface layer and possibly the intermediate layer can support the stem of the stud and improve the holding of the anti-skid stud in place.

The bottom flange 14 of the anti-skid stud, together with the underlayer 20, can substantially determine the stud piercing force of the anti-skid stud with respect to the driving surface. When the outdoor temperature is above the freezing point, the underlayer may consist of a relatively soft elastic material, allowing the anti-skid stud to retract deeper into the hole for the anti-skid stud. Thus, the anti-skid stud can also wear the driving surface to a lesser extent. Moreover, noise caused by the tyre can be substantially reduced.

When the outdoor temperature decreases so that ice or snow may build up on the road, the material of the underlayer 20 can substantially harden, whereby the anti-skid stud can more efficiently bite into the driving surface, improving the traction of the tyre.

Figures 2a to 2b illustrate underlayers according to some examples. The figures do not show the surface layer 18 or a possible intermediate layer 22. Figure 2a shows an adaptive material layer 21. Figure 2b shows the adaptive material layer 21 and a stud pad 23.

Figure 3 shows some exemplary locations for the adaptive material layer 21, the intermediate layer 22 and the surface layer 18 of the tyre in relation to the anti-skid stud 10.

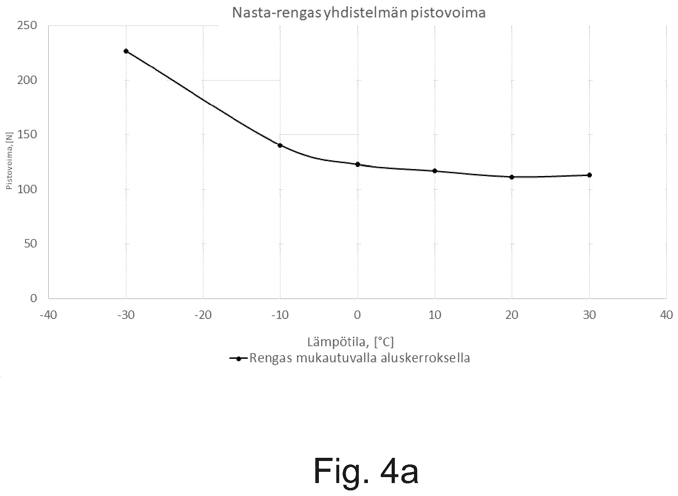

Figure 4a shows an example of stud piercing force for a winter tyre comprising an underlayer consisting of an adaptive layer 21. The stud piercing force is measured with the tyre-stud combination according to the description.

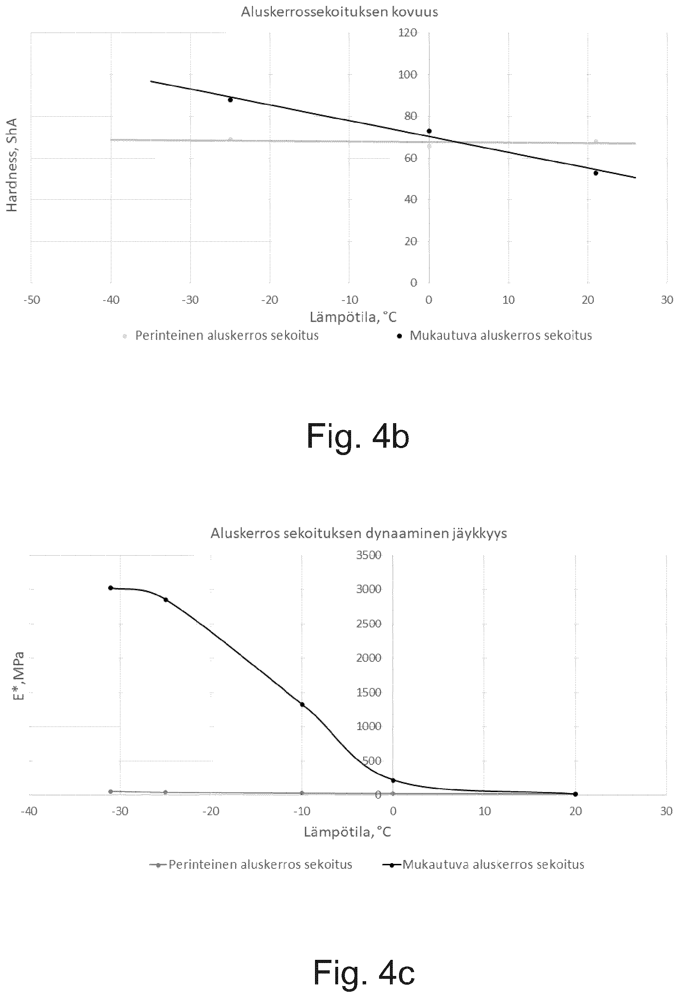

Figure 4b shows an example of hardness for an underlayer consisting of an adaptive layer 21. Further, Fig. 4b shows the hardness of an underlayer consisting of a conventional underlaying layer.

Figure 4c shows an example of dynamic stiffness for an underlayer consisting of an adaptive layer 21. Further, Fig. 4c shows the dynamic stiffness for an underlayer consisting of a conventional underlayer.

The dynamic stiffness of the adaptive underlayer at a temperature of 0°C may be at least double compared with the dynamic stiffness at a temperature of 20°C. Thus, the traction properties of the winter tyre may be substantially improved at 0°C.

The dynamic stiffness of the adaptive underlayer at -25°C may be at least 20 times the dynamic stiffness of the adaptive underlayer at 20°C. Thus, the traction properties of the winter tyre can be substantially improved and, for example, the stopping distance needed by the winter tyre under certain conditions can be substantially reduced.

In a preferred example, the dynamic stiffness of the adaptive underlayer at 20°C is suitably lower than 20 MPa. Furthermore, the dynamic stiffness of the adaptive underlayer at 0°C may be at least 30 MPa, preferably at least 40 MPa, and most preferably at least 50 MPa, for example between 50 and 300 MPa. Furthermore, the dynamic stiffness of the adaptive underlayer at -25°C may be at least 500 MPa, for example between 500 and 3500 MPa, preferably at least 800 MPa, and most preferably at least 1000 MPa, for example between 1000 and 3000 MPa. Thus, the traction properties of the winter tyre can be substantially improved and, for example, the stopping distance needed by the winter tyre under certain conditions can be substantially reduced. Moreover, in spite of the good traction properties, wear of the road surface can be reduced.

In an embodiment, the ShA hardness of the underlayer is arranged to be at least 65, preferably at least 70, more preferably at least 75, for example between 75 ShA and 95 ShA, and more preferably at least 80, and most preferably at least 80, at an ambient temperature of -30°C. Further, the ShA hardness of the underlayer is thus not greater than 60 ShA, preferably not greater than 55, more preferably not greater than 50, and most preferably not greater than 45, at an ambient temperature of +20°C. Such an anti-skid stud can have particularly good properties in view of varying ambient temperatures. A softer underlayer material can substantially increase the retraction of the stud into the tyre at warmer temperatures and thereby reduce road wear and noise. The greater the difference in hardness of the material at different temperatures, the greater the effect of the underlayer on the traction of the tyre in cold weather and on road wear in warm weather. Thus, the effects of the underlayer can be particularly advantageous for both cold and warm conditions.

In an embodiment, the ShA hardness of the underlayer is at least 60, preferably at least 65, more preferably at least 70, and most preferably at least 75, at an ambient temperature of -5°C. Further, the ShA hardness of the underlayer is thus not greater than 100, preferably not greater than 95, and most preferably not greater than 90, at an ambient temperature of -5°C. Thus, the advantages of the underlayer can be manifest as soon as the ambient temperature falls below the freezing point.

In an embodiment, the ShA hardness of the underlayer is between 55 and 75, preferably between 60 and 75, and most preferably between 60 and 70, at an ambient temperature of 0°C. Thus, at a temperature around 0°C, the hardness can be particularly suitable for the underlayer.

The adaptive material layer 21 may comprise, primarily comprise, or consist of a material whose glass transition temperature (Tg) may be at least-20°C, for example at least -15°C, preferably at least -12°C, more preferably at least -10°C, or at least -8°C, and most preferably at least -5°C. Furthermore, the glass transition temperature of said material may be not higher than 20°C, for example not higher than 15°C, preferably not higher than 12°C, more preferably not higher than 10°C, or not higher than 8°C, and most preferably not higher than 5°C. Thus, the hardening of the underlayer can be suitable in view of road wear and traction. The closer to 0°C the glass transition temperature of the material is arranged, the more accurately the hardening of the underlayer may take place at a point optimal in view of road wear and traction.

In an embodiment, the adaptive material layer 21 may comprise at least 20 phr of styrene butadiene rubber. The content of styrene butadiene rubber in the adaptive material layer 21 may be at least 20 phr, preferably at least 30 phr, more preferably at least 40 phr, and most preferably at least 50 phr. Further, the adaptive material layer 21 may comprise not more than 100 phr of styrene butadiene rubber. By using styrene butadiene rubber, the glass transition temperature can be more easily determined as desired.

Preferably, the adaptive material layer 21 contains styrene butadiene rubber which may be solution-polymerized styrene butadiene rubber. The vinyl content of the solution-polymerized styrene butadiene rubber, calculated from the content of butadiene rubber, is thus preferably at least 30%, for example between 30% and 65%, most preferably at least 35%. Furthermore, the vinyl content of the styrene butadiene rubber, calculated from the content of butadiene rubber, is thus preferably not greater than 80%, more preferably not greater than 70% and most preferably not greater than 60%. Furthermore, the styrene content of the styrene butadiene rubber produced is preferably between 30% and 45%, most preferably between 32% and 41%. Thus, the glass transition temperature can be particularly suitable for the underlayer, and hardening can take place at a moment determined more precisely in advance.

In a particularly advantageous embodiment, the adaptive material layer 21 contains styrene butadiene rubber which may be solution-polymerized styrene butadiene rubber, wherein the vinyl content of the styrene butadiene rubber, calculated from the content of butadiene rubber, is at least 30%, preferably in a range between 30% and 70%, and most preferably in a range between 35% and 65%. Furthermore, in this embodiment, the styrene content of the styrene butadiene rubber is preferably in a range between 25% and 45%, and more preferably in a range between 30% and 40%. This embodiment can provide particularly suitable properties for the underlayer so that hardening of the underlayer can take place in a controlled manner.

In an embodiment, the underlayer comprises solution-polymerized styrene butadiene rubber having a vinyl content, calculated from the content of butadiene rubber, between 45% and 65% and a styrene content between 30% and 40%. Thus, the hardening of the underlayer may take place in a more controlled manner within a predetermined range.

The adaptive material layer 21 can contain resin. The amount of resin, if used in the adaptive material layer, may be at least 5 phr of resin, preferably at least 10 phr of resin, more preferably at least 15 phr of resin, and most preferably at least 20 phr of resin. The adaptive material layer 21 may contain not more than 70 phr of resin, preferably not more than 60 phr of resin, more preferably not more than 50 phr of resin, and most preferably not more than 40 phr of resin. By applying resin, the glass transition temperature of the underlayer can be raised by a predetermined level so that the hardening of the underlayer can be implemented within a predetermined temperature range. In a preferred embodiment, the adaptive material layer 21 contains 5 to 60 phr of resin, more preferably 10 to 40 phr of resin, and most preferably 15 to 30 phr of resin.

The adaptive material layer 21 may contain reinforcement. The amount of reinforcement, if used in the adaptive material layer 21, may be at least 10 phr of reinforcement, preferably at least 20 phr of reinforcement, more preferably at least 30 phr of reinforcement, and most preferably at least 35 phr of reinforcement. Furthermore, the adaptive material layer 21 may contain not more than 60 phr of reinforcement, preferably not more than 55 phr of reinforcement, more preferably not more than 40 phr of reinforcement, and most preferably not more than 50 phr of reinforcement.

The reinforcement may contain or consist of carbon black reinforcement and/or silica reinforcement. The reinforcement can be used to increase the strength of the underlayer, whereby the strength of the underlayer can be improved. Furthermore, the reinforcement can be used to influence the ShA hardness of the underlayer so that the hardness of the underlayer can be more easily optimized to a desired level.

The adaptive material layer 21 may contain oil. The amount of oil, if used, can be at least 5 phr, more preferably at least 8 phr, and most preferably at least 10 phr. Further, the amount of oil may be not more than 25 phr, more preferably not more than 22 phr, and most preferably not more than 20 phr.

Said oil is preferably selected from the group of:
- vegetable oil,
- TDAE oil (treated distillate aromatic extract),
- MES oil (mild extracted solvate), and
- RAE oil (residual aromatic extract).

Preferably, said oil contains or consists of at least primarily TDAE oil.

The material of the underlayer may be vulcanized so that sulphur is used as the vulcanizing agent.

### Stud pad

In an embodiment, a stud pad 23 is arranged in connection with the anti-skid stud. In this embodiment, the solution comprises both the underlayer and the stud pad, as shown in Fig. 3b.

If the studded tyre comprises a stud pad 23 in addition to the underlayer 20, the stud pad may contain, and is preferably made of, a polymer material having a hardness substantially dependent on the ambient temperature.

Preferably, said stud pad 23 of the anti-skid stud is made of a polymer material which is configured to soften at warm temperatures so that the ShA hardness of the stud pad is not greater than 55 at an ambient temperature of +22°C, and to harden at cold temperatures so that the ShA hardness of the stud pad is at least 70 at an ambient temperature of -30°C. Preferably, the ShA hardness of the stud pad of the anti-skid stud is at least 60, preferably at least 70, at an ambient temperature of - 5°C, and/or the ShA hardness of the stud pad of the anti-skid stud is not greater than 95, preferably not greater than 90, at an ambient temperature of -5°C. Hardening of the stud pad under cold conditions provides the anti-skid stud with a better support and thereby provides the tyre with better traction properties. In other words, hardening of the stud pad can increase the stud piercing force of the anti-skid stud, because the anti-skid stud thus cannot substantially retract into the tyre, whereby the penetration of the stud into the ice is greater and the traction of the tyre can be significantly better. In warm conditions, the stud pad can substantially soften, whereby the softening stud pad may allow the stud body to retract into the tyre, whereby it can reduce the stud piercing force and the dynamic stud impact and thereby reduce the wear of the road.

In the embodiment comprising the stud pad 23, the stud pad may contain at least 10 phr of one or more of the following:
- styrene butadiene rubber,
- natural rubber,
- polybutadiene rubber,
- ethylene propylene diene rubber,
- nitrile rubber, and
- chloroprene rubber.

The stud pad may contain
- at least 5 phr of resin, preferably 5 to 60 phr of resin, and/or
- at least 20 phr, preferably 20 to 50 phr of at least one reinforcement which is preferably selected from the group of carbon black reinforcement and silica reinforcement.

The amount of resin in the stud pad may be at least 5 phr of resin, preferably at least 10 phr of resin, more preferably at least 15 phr of resin, and most preferably at least 20 phr of resin. Furthermore, the stud pad 23 may contain not more than 70 phr of resin, preferably not more than 60 phr of resin, more preferably not more than 50 phr of resin, and most preferably not more than 40 phr of resin. By applying resin, the glass transition temperature of the stud pad can be raised by a predetermined level so that the hardening of the stud pad can be implemented within a predetermined temperature range. In an embodiment, the stud pad contains 5 to 60 phr of resin, more preferably 10 to 40 phr of resin, and most preferably 15 to 30 phr of resin.

In an embodiment, at an ambient temperature above 0°C, the stud pad is an elastic piece having a capacity to resume its initial shape after compression. Preferably, the stud pad is made, or at least primarily made, of an elastomer material having a capacity to resume its initial shape after compression, at an ambient temperature above 0°C. This can substantially reduce road wear when the ambient temperature is high enough that no ice is formed on road surfaces; moreover, the stud pad having resumed its initial thickness can improve the road holding properties of the anti-skid stud at temperatures below the freezing point.

In an embodiment comprising a stud pad, the thickness of the stud pad, in the rest position of the anti-skid stud, i.e. when the anti-skid stud is not subjected to external forces, such as pressure caused by the driving surface, may be at least 0.4 mm, preferably at least 0.7 mm, and most preferably at least 0.9 mm. Furthermore, the thickness of the stud pad may be not greater than 3 mm, preferably not greater than 2.5 mm, more preferably not greater than 2.0 mm, and most preferably not greater than 1.5 mm. By applying not only an underlayer but also a stud pad having said thickness, the road-holding properties of the anti-skid stud in relation to the wear of the driving surface can be particularly suitable. Furthermore, the manufacture of the vehicle tyre may be more efficient compared with a stud pad having a different thickness. The stud pad of the presented thickness can, in combination with the underlayer 20, be sufficiently compressible to reduce wear of the driving surface, as well as to protrude the tip of the anti-skid stud sufficiently from the tyre to provide the tyre with good traction on an icy driving surface. Moreover, installing a stud pad thicker than that presented may be challenging, and manufacturing a stud pad thinner than that presented may be particularly challenging.

The shape of the bottom of the stud pad may be selected, for example, from the list below:
- circle,
- ellipse,
- shape of the bottom flange of the anti-skid stud,
- triangle,
- **rectangle,**
- pentagon,
- polygon, and
- ribbon, such as a ring-shaped ribbon.

Instead of these, it is also possible to use another shape in a stud pad. The ribbon shape is preferably the shape of an endless loop.

### Method

A method for manufacturing a vehicle tyre may comprise, for example, the following steps:
- providing
   ∘ an anti-skid stud comprising a bottom flange, and
   ∘ a vehicle tyre comprising a tyre body (carcass) and a surface layer of the tyre, as well as an underlayer arranged below the surface layer, the surface layer of the tyre being provided with a hole for an anti-skid stud and
- fastening the anti-skid stud to the anti-skid stud hole provided in the vehicle tyre.

By this method, the anti-skid stud can be installed in the tyre in an efficient way.

### Example 1.

Studded tyres were made, including an underlayer comprising a novel adaptive material layer. Stud piercing force measurements were taken on the tyres. Stud piercing force results are shown in Fig. 4a.

Figure 4a shows stud piercing forces measured on a studded tyre as a function of temperature. The graph shows that when the novel adaptive material layer was used, the stud piercing force measured from the tyre clearly increased as the temperature dropped.

When the adaptive material layer was used, the stud piercing force was relatively low at a high temperature, and increased significantly as the temperature dropped. In other words, the stud piercing force was clearly lower in a warm environment than in a cold environment.

### Example 2.

The behaviour of the adaptive material layer in relation to the ambient temperature was examined. Further, this was compared with an underlayer of prior art.

Underlayer materials were made, and laboratory measurements were taken on vulcanized underlayer materials for both hardness and dynamic stiffness as a function of temperature.

Figure 4b shows changes in hardness of underlayer materials as the temperature changes. Figure 4b shows the hardness of both an adaptive material layer and a conventional underlayer material as a function of temperature. The graph shows that the hardness of the adaptive material layer was significantly changed in the temperature range between +20°C and -30°C. On the other hand, the hardness of the conventional underlayer material remained almost constant.

Figure 4c shows the hardness (DMTA, E*) of both the adaptive material layer and the conventional underlayer material as a function of temperature. The graph shows that the stiffness of the adaptive material layer was significantly changed in the temperature range between +20°C and -30°C. The stiffness of the conventional underlayer material, in turn, remained almost constant in said temperature range.

The invention and its different embodiments are not limited to the above presented examples of the embodiments. The presented single features may be present in a solution according to the invention irrespective of the other presented single features. The expressions describing the presence of the features included in the claims are open in such a way that presenting the characteristics does not exclude such characteristics from the solution which are not presented in the independent or dependent claims.

## Claims

1. A studded pneumatic tyre for a vehicle, comprising a tread (18) provided with a number of anti-skid studs (10),
**characterized in that**
- the studded tyre comprises an underlayer (20) arranged below the tread, wherein the underlayer comprises an adaptive material layer (21),
- an anti-skid stud (10) is arranged at least partly on said underlayer (20), and
- the shape of the stud, in combination with the underlayer, is configured to provide the anti-skid stud with a stud piercing force, wherein
A) at an ambient temperature of 0°C, the stud piercing force of the anti-skid stud is at least 6% greater than the stud piercing force of the anti-skid stud at an ambient temperature of 20°C, and
B) at an ambient temperature of -30°C, the stud piercing force of the anti-skid stud is at least 20% greater than the stud piercing force of the anti-skid stud at an ambient temperature of 20°C,
wherein the studded pneumatic tyre preferably comprises an intermediate layer (22) arranged between the underlayer (20) and the tread (18),
wherein a thickness of the intermediate layer is preferably at least 1 mm.

2. The studded tyre for a vehicle according to claim 1, wherein the stud piercing force of the anti-skid stud is lower than 120 N at an ambient temperature of 20°C.

3. The studded tyre for a vehicle according to claim 1 or 2, wherein the dynamic stiffness (E*, MPa) of the adaptive material layer (21) is configured to be
- lower than 20 MPa at an ambient temperature of +20°C,
- between 40 and 400 MPa at an ambient temperature of 0°C, and
- at least 500 MPa at an ambient temperature of -30°C,
wherein the dynamic stiffness is determined according to the standard ASTM D5992-96 (reapproved 2018).

4. The studded tyre for a vehicle according to any of the preceding claims, comprising a stud pad (23) arranged at least partly between said underlayer (20) and the anti-skid stud (10).

5. The studded tyre for a vehicle according to any of the preceding claims, wherein a thickness of the underlayer (20) is at least 0.5 mm, more preferably at least 1.0 mm and not greater than 8 mm.

6. The studded tyre for a vehicle according to any of the preceding claims, wherein the underlayer (20) consists of an adaptive material layer (21).

7. The studded tyre for a vehicle according to any of the preceding claims, wherein said adaptive material layer (21) is made of a material having a glass transition temperature (Tg) arranged between -20°C and +12°C, and more preferably between -5°C and +5°C.

8. The studded tyre for a vehicle according to any of the preceding claims, wherein the adaptive material layer (21) contains at least 20 phr of styrene butadiene rubber.

9. The studded tyre for a vehicle according to any of the preceding claims, wherein the adaptive material layer (21) contains at least 5 phr of resin.

10. The studded tyre for a vehicle according to any of the preceding claims, wherein the adaptive material layer (21) contains at least 20 phr of reinforcement, preferably 20 to 60 phr of reinforcement.

11. The studded tyre for a vehicle according to claim 10, wherein said reinforcement contains one or more reinforcements selected from the group of silica reinforcement and carbon black reinforcement.

12. The studded tyre for a vehicle according to any of the preceding claims, wherein the adaptive material layer contains solution-polymerized styrene butadiene rubber having a vinyl content, calculated from the content of butadiene rubber, between 30% and 65%, and a styrene content between 25% and 45%.

13. The studded tyre for a vehicle according to any of the preceding claims, wherein the adaptive material layer comprises
- at least 60 phr of solution-polymerized styrene butadiene rubber, and
- 0 to 20 phr of polybutadiene rubber.

14. The studded tyre for a vehicle according to any of the preceding claims, wherein the ShA hardness of the adaptive material layer (21) is
- not greater than 60, preferably between 40 and 55 at an ambient temperature of +20°C, and
- at least 70, preferably between 70 and 90 at an ambient temperature of -30°C.

15. Use of an elastomer material configured to soften at warm temperatures and to stiffen at cold temperatures so that the dynamic stiffness (E*, MPa) of the material is
- lower than 20 MPa at an ambient temperature of +20°C,
- between 40 and 400 MPa at an ambient temperature of 0°C, and
- at least 500 MPa at an ambient temperature of -30°C,
as an underlayer in a tyre for a vehicle,
wherein the dynamic stiffness is determined according to the standard ASTM D5992-96 (reapproved 2018).
